# EUROPEAN PATENT APPLICATION

(11) **EP 4 730 462 A1**
(43) Date of publication of application: **22.04.2026**
(21) Application number: 25208316.7
(22) Date of filing: 13.10.2025
(51) Int. Cl.: H01M 10/052, H01M 50/403, H01M 50/426, H01M 50/449, H01M 50/46

(54) **SEPARATOR AND METHOD FOR PREPARING THE SAME, BATTERY, ENERGY STORAGE APPARATUS, AND ELECTRICITY-CONSUMPTION DEVICE**

(30) Priority: 16.10.2024 CN 202411445009
(71) Applicant: Hithium Tech HK Limited, Kowloon, Hong Kong (HK)
(72) Inventor: ZHANG, Caomeng, Xiamen, Fujian, 36110 (CN); XIAO, Wenwu, Xiamen, Fujian, 361100 (CN); GAO, Peng, Xiamen, Fujian, 361100 (CN); HUANG, Jingcan, Xiamen, Fujian, 361100 (CN); HUANG, Zhiguo, Xiamen, Fujian, 361100 (CN)
(74) Representative: Manitz Finsterwald Patent- und Rechtsanwaltspartnerschaft mbB

(57) **Abstract**

Provided are a separator and a method for preparing the same, a battery, an energy storage apparatus, and an electricity-consumption device. The separator includes a base film and an adhesive layer arranged on at least one surface of the base film. The adhesive layer includes a plurality of adhesive dots distributed in a dot-array pattern. A thickness of each of the plurality of adhesive dots gradually decreases from an edge of the adhesive dot to a center of the adhesive dot.

## Description

### FIELD

The present disclosure relates to the field of electrochemical technologies, and more particularly, to a separator and a method for preparing the same, a battery, an energy storage apparatus, and an electricity-consumption device.

### BACKGROUND

A secondary battery, such as a lithium-ion battery, is generally composed of a positive electrode plate, a separator, a negative electrode plate, and an electrolyte. The separator is located between the positive electrode plate and the negative electrode plate, providing separation between a positive electrode and a negative electrode to prevent the two electrodes from being in contact with each other, which would otherwise result in a short circuit.

To enhance adhesion performance of the separator, an adhesive coating is required to be arranged at the separator. However, arranging the adhesive coating may impair electrolyte wettability of the separator, which in turn affects kinetic performance of the secondary battery. Although an adhesive coating in a dot-array pattern may be formed on a surface of the separator through a dot-array coating technology to enhance the electrolyte wettability of the separator and thus mitigate its impact on the kinetic performance of the secondary battery, there is still an issue that adhesion performance of the separator is low.

### SUMMARY

Embodiments of the present disclosure provide a separator and a method for preparing the same, a battery, an energy storage apparatus, and an electricity-consumption device, which can mitigate an impact on kinetic performance of a secondary battery while enhancing adhesion performance of the separator.

According to embodiments in a first aspect of the present disclosure, a separator is provided. The separator includes a base film and an adhesive layer arranged on at least one surface of the base film. The adhesive layer includes a plurality of adhesive dots distributed in a dot-array pattern. A thickness of each of the plurality of adhesive dots gradually decreases from an edge of the adhesive dot to a center of the adhesive dot.

In some embodiments of the present disclosure, the thickness of each of the plurality of adhesive dots is H, where 2 µm≤H≤15 µm.

In some embodiments of the present disclosure, each of the plurality of adhesive dots has a crater-like morphology with a raised edge and a sunken central part.

In some embodiments of the present disclosure, each of the plurality of adhesive dots has a diameter ranging from 200 µm to 4000 µm.

In some embodiments of the present disclosure, the adhesive layer has a mass of M, and the base film has an area of S, where 0.5 g/m²≤M/S≤2.0 g/m².

In some embodiments of the present disclosure, the base film has a thickness ranging from 5 µm to 20 µm.

In some embodiments of the present disclosure, each of the plurality of adhesive dots includes polymer particles. The polymer particles are selected from at least one of polyvinylidene fluoride or polymethyl methacrylate.

According to embodiments in a second aspect of the present disclosure, a method for preparing the separator as described in the above embodiments in the first aspect of the present disclosure is provided. The method includes: dispensing an adhesive solution onto the at least one surface of the base film to form initial structures of the plurality of adhesive dots distributed in the dot-array pattern, in which the adhesive solution contains a first solvent; dispensing a second solvent onto surfaces of the initial structures of the plurality of adhesive dots to form second solvent droplets, in which the second solvent is insoluble or slightly soluble in the first solvent; and performing a heating treatment on the initial structures with the second solvent droplets on the surfaces of the initial structures, in which the initial structures of the plurality of adhesive dots are cured by heating while the second solvent droplets are evaporated by heating, to form the plurality of adhesive dots.

In some embodiments of the present disclosure, a temperature for the heating treatment ranges from 60 °C to 90 °C. A boiling point of the second solvent is lower than or equal to 90 °C.

In some embodiments of the present disclosure, each of the second solvent droplets has a thickness ranging from 1 µm to 13 µm and a diameter ranging from 200 µm to 1000 µm.

In some embodiments of the present disclosure, the first solvent is water. The second solvent is selected from at least one of dichloromethane, dichloroethane, or carbon tetrachloride; or the first solvent is selected from at least one of dimethylacetamide or N-methylpyrrolidone, and the second solvent is selected from at least one of cyclohexane or cyclopentane.

According to embodiments in a third aspect of the present disclosure, a battery is provided. The battery includes the separator as described in the above embodiments in the first aspect of the present disclosure, or the separator prepared by the method as described in the above embodiments in the second aspect of the present disclosure.

In some embodiments of the present disclosure, the battery includes an electrode plate. An adhesion strength between the separator and the electrode plate ranges from 2 N/m to 10 N/m

According to embodiments in a fourth aspect of the present disclosure, an energy storage apparatus is provided. The energy storage apparatus includes a housing and at least one battery received in the housing. Each of the at least one battery is the battery as described in the above embodiments in the third aspect of the present disclosure.

According to embodiments in a fifth aspect of the present disclosure, an electricity-consumption device is provided. The electricity-consumption device includes the energy storage apparatus as described in the above embodiments in the fourth aspect of the present disclosure, and the energy storage apparatus is configured to supply power to the electricity-consumption device.

Compared with the related art, the present disclosure can at least provide the following advantageous effects.

Embodiments of the present disclosure provide the separator and the method for preparing the same, the battery, the energy storage apparatus, and the electricity-consumption device. The separator includes the base film and the adhesive layer arranged on at least one surface of the base film. The adhesive layer includes the plurality of adhesive dots distributed in the dot-array pattern. The thickness of each of the plurality of adhesive dots gradually decreases from the edge of the adhesive dot to the center of the adhesive dot, which is beneficial for the polymer particles in the adhesive dots to migrate towards the center and a periphery when being compressed (e.g., in a hot-pressing process). Therefore, the polymer particles can be easily embedded into pores of the electrode plate, realizing "physical riveting" with the electrode plate, and thus enhancing adhesion performance between the separator and the electrode plate. In addition, the adhesive layer of the dot-array structure can provide a wetting path and a wetting space for an electrolyte, improving electrolyte wettability of the separator, and thus mitigating its impact on the kinetic performance of the secondary battery.

### BRIEF DESCRIPTION OF THE DRAWINGS

In order to describe the technical solutions in the embodiments of the present disclosure more clearly, the drawings to be used in the embodiments will be briefly introduced below. Obviously, the drawings in the following description are only some embodiments of the present disclosure, and other drawings can be obtained by those of ordinary skill in the art based on these drawings without any inventive efforts.
FIG. 1 is a photograph of adhesive dots on a surface of a separator in the related art.
FIG. 2 is a schematic structural view of a separator according to an embodiment of the present disclosure.
FIG. 3 is a schematic structural view of an adhesive dot according to an embodiment of the present disclosure.
FIG. 4 is a schematic structural diagram of a formation process of an adhesive dot according to an embodiment of the present disclosure.
FIG. 5 is a schematic structural view of a household energy storage system according to an embodiment of the present disclosure.
FIG. 6 is a schematic structural view of an energy storage system according to an embodiment of the present disclosure.
FIG. 7 is a photograph of an adhesive dot prepared in Example 2 of the present disclosure.

Description of reference numerals of the accompanying drawings: 1-energy storage apparatus, 2-electrical energy conversion apparatus, 3-first user load, 4-second user load,10-base film, 20-adhesive layer, 21-adhesive dot, 211-central sunken region, 400-energy storage system, 410-high voltage cable, 420-first electrical energy conversion apparatus, 430-second electrical energy conversion apparatus.

### DETAILED DESCRIPTION

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On a basis of the embodiments of the present disclosure, all other embodiments obtained by those skilled in the art without creative labor shall fall within the protection scope of the present disclosure.

In the present disclosure, the orientation or the position indicated by terms such as "up," "down," "left," "right," "front," "rear," "top," "bottom," "inner," "outer," "vertical," "horizontal," "transverse," and "longitudinal" should be construed to refer to the orientation or the position as shown in the drawings. These terms are primarily intended to better describe the present disclosure and the embodiments thereof, and are not intended to limit the pointed device, element, or component must have a specific orientation, or be constructed and operated in a specific orientation.

Moreover, some of the above terms may be used to convey other meanings in addition to orientation or positional relationships. For example, the term "over" may also be used to mean some kind of attachment or connection relationship in some cases. For those of ordinary skill in the art, specific meanings of these terms in the present disclosure can be understood according to specific circumstances.

In addition, terms such as "mount," "dispose," "provided with," "connect," and "connected to" should be understood in a broad sense. For example, it may mean a fixed connection or a detachable connection or connection as one piece; mechanical connection or electrical connection; direct connection or indirect connection through an intermediate; or internal communication of two devices, two elements, or two components. For those of ordinary skill in the art, specific meanings of the above-mentioned terms in the present disclosure can be understood according to specific circumstances.

Furthermore, the terms "first" and "second" are primarily used to distinguish between different devices, elements, or components (specific kinds and configurations may or may not be the same), and are not intended to indicate or imply relative importance and a number of indicated devices, elements, or components. Unless otherwise specified, "plurality" means two or more.

It should be noted that, in the present disclosure, a lithium-ion battery is described as an example of a battery, and the battery according to some embodiments of the present disclosure is not limited to the lithium-ion battery.

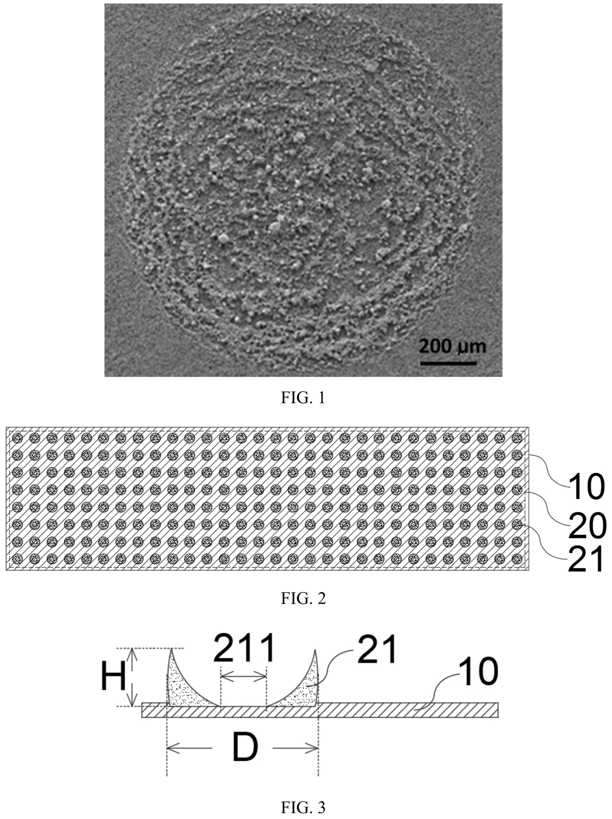

As illustrated in FIG. 1, an adhesive dot formed in the related art has a "bun-like" morphology with a raised center. This adhesive dot has higher aggregation and greater cohesion, which limits a migration range of polymer particles in the adhesive dot after thermal pressing. Therefore, this adhesive dot is less likely to sufficiently bond with a separator, resulting in relatively poor adhesion performance of the separator.

In view of this, embodiments of the present disclosure provide a separator. As illustrated in FIG. 2, the separator includes a base film 10 and an adhesive layer 20 arranged on at least one surface of the base film 10. The adhesive layer 20 includes a plurality of adhesive dots 21 distributed in a dot-array pattern. As illustrated in FIG. 3, a thickness of each of the plurality of adhesive dots 21 gradually decreases from an edge of the adhesive dot 21 to a center of the adhesive dot 21.

In some embodiments, the adhesive layer 20 is arranged at a surface of the base film 10 facing towards a positive electrode plate. In some embodiment, the adhesive layer 20 is arranged at a surface of the base film 10 facing towards a negative electrode plate. In some embodiments, the adhesive layer 20 is arranged at two surfaces of the base film 10, and the two surfaces of the base film 10 face towards the positive electrode plate and the negative electrode plate, respectively.

In the separator according to some embodiments of the present disclosure, the thickness of the adhesive dot gradually decreases from the edge of the adhesive dot to the center of the adhesive dot, and thus the adhesive dot has smaller cohesion. When being compressed, the polymer particles in the adhesive dot are likely to migrate to a center and a periphery. That is, the adhesive dot may have a larger migrating space. Therefore, the polymer particles can be easily embedded into pores of an electrode plate, realizing "physical riveting" with the electrode plate, and thus enhancing adhesion performance between the separator and the electrode plate. In addition, the adhesive layer of the dot-array structure can provide a wetting path and a wetting space for an electrolyte, improving electrolyte wettability of the separator, and thus mitigating its impact on kinetic performance of the secondary battery.

In some embodiments, the thickness of each of the plurality of adhesive dots is H, where 2 µm≤H≤15 µm. In some other embodiments, 4 µm ≤ H ≤ 10 µm. For example, H is 2 µm, 4 µm, 5 µm, 8 µm, 10 µm, 12 µm, or 15 µm. It should be understood that the adhesive dot according to embodiments of the present disclosure has a structural characteristic of gradually decreasing from the edge to the center. The maximum thickness of the adhesive dot is typically at its periphery. In this way, the thickness of the adhesive dot according to some embodiments of the present disclosure may refer to a thickness at the peripheral edge of the adhesive dot. When the thickness of the adhesive dot is too large (e.g., greater than 15 µm), an ion transport effect of the separator may be affected, affecting kinetic performance of the lithium-ion battery. When the thickness of the adhesive dot is too small (e.g., smaller than 2 µm), limited migrating of polymer particles occurs in the adhesive dot when being compressed, making the polymer particles be less likely to be embedded into the pores of the electrode plate. In addition, an amount of the polymer particles to be embedded into a center of the electrode plate is limited, thus failing to provide sufficient adhesion strength, which leads to a decrease in adhesion performance between the separator and the electrode plate. By adjusting and controlling the thickness of the adhesive dot within the above range, the influence on the kinetic performance of the secondary battery can be reduced while enhancing adhesion performance of the separator.

In some embodiments, as illustrated in FIG. 3, each of the plurality of adhesive dots 21 has a crater-like morphology with a raised edge and a sunken central part. For the adhesive dot of this morphology, when being compressed, the polymer particles migrate more easily towards the center and the periphery to be easily embedded into the pores of the electrode plate, which facilitates enhancing the adhesion performance between the separator and the electrode plate.

In some embodiments, as illustrated in FIG. 3, the adhesive dot 21 has a central sunken region 211, and the base film 10 is exposed in this central sunken region 211. Therefore, after being compressed, the polymer particles in the adhesive dot may experience less resistance when migrating towards the central sunken region. That is, the polymer particles migrate more easily into the central sunken region, and thus are easily embedded into the pores of the electrode plate, which is beneficial for enhancing the adhesion performance between the separator and the electrode plate. In addition, since the base film 10 is exposed in the central sunken region 211, a risk of pore blockage caused by adhesive dot swelling is reduced, reducing the influence on the kinetic performance of the lithium-ion battery.

In some embodiments, each of the plurality of adhesive dots has a diameter ranging from 200 µm to 4000 µm. In some other embodiments, each of the plurality of adhesive dots has a diameter ranging from 300 µm to 2000 µm. For example, the adhesive dot has a diameter of 200 µm, 500 µm, 800 µm, 1000 µm, 1500 µm, 2000 µm, 3000 µm, or 4000 µm. The adhesive dot according to the embodiments of the present disclosure may be substantially regarded as a circular dot. As illustrated in FIG. 3, the diameter of the adhesive dot refers to a dimension of a widest part of the adhesive dot in a horizontal direction, which is denoted as D. When the diameter of the adhesive dot is too small (for example, smaller than 200 µm), in a process of forming the adhesive dot, higher accuracy of the dispensing device is required, and morphological consistency of the adhesive dots distributed in the dot-array pattern is more difficult to be controlled, which is not conducive to improving a dispensing efficiency. When the diameter of the adhesive dot is too large (for example, greater than 4000 µm), under the same adhesive coating amount, too few adhesive dots are distributed per unit area, resulting in a small effective bonding area of the adhesive dot, which in turn leads to poor adhesion performance between the separator and the electrode plate. By adjusting and controlling the diameter of the adhesive dot within the above range, the adhesion performance of the adhesive dot is ensured while maintaining the morphology consistency of the adhesive dot, and improvement of the dispensing efficiency can be facilitated.

In some embodiments, the adhesive layer has a mass of M, and the base film has an area of S, where 0.5 g/m²≤M/S≤2.0 g/m². For example, M/S is 0.5 g/m², 1.0 g/m², 1.5 g/m², or 2.0 g/m². By adjusting and controlling the M/S within the above range, an increase in ionic impedance of the separator due to an excessive mass of the adhesive layer is avoided while realizing effective bonding between the separator and the electrode plate. The above M/S is defined as a single-sided areal density of the adhesive layer.

In some embodiments, the base film has a thickness ranging from 5 µm to 20 µm. For example, the thickness of the base film is 5 µm, 10 µm, 15 µm, or 20 µm. In the embodiments of the present disclosure, the thickness of the base film is not limited as long as the separator with the adhesive layer can be obtained.

In some embodiments, each of the plurality of adhesive dots includes polymer particles. The polymer particles are selected from at least one of polyvinylidene fluoride (PVDF) particles or polymethyl methacrylate (PMMA) particles. The polymer particles may be approximately spherical particles. A particle size of the polymer particle is not particularly limited in the present disclosure. For example, when the polymer particles are PVDF particles, an average primary particle size of the PVDF ranges from 0.1 µm to 2 µm, an average secondary particle size of PVDF ranges from 5 µm to 8 µm, and a weight-average molecular weight ranges from 50 to 150. When the polymer particles are PMMA particles, an average particle size of the PMMA particles ranges from 0.5 µm to 10 µm.

Embodiments of the present disclosure also provide a method for preparing the separator according to any one of the above embodiments. The method includes the following steps.

At step A, an adhesive solution is dispensed onto the at least one surface of the base film to form initial structures of the plurality of adhesive dots distributed in the dot-array pattern. The adhesive solution contains a first solvent.

At step B, a second solvent is dispensed onto surfaces of the initial structures of the plurality of adhesive dots to form second solvent droplets. The second solvent is insoluble or slightly soluble in the first solvent.

At step C, a heating treatment is performed on the initial structures with the second solvent droplets on the surfaces of the initial structures. Further, the initial structures of the plurality of adhesive dots are cured by heating while the second solvent droplets are evaporated by heating, to form the plurality of adhesive dots.

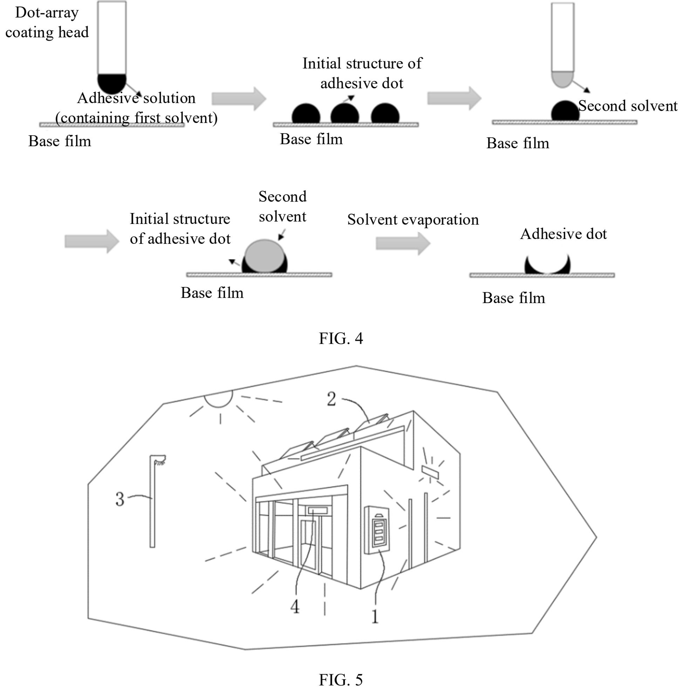

FIG. 4 is a schematic diagram of a formation process of an adhesive dot according to an embodiment of the present disclosure. As illustrated in FIG. 4, in the step A, the adhesive solution may be dispensed to the at least one surface of the base film by a dot-array coating head of a first dispensing device. It should be understood that the formed adhesive dots are still in a liquid state and do not have a morphology with a thin central part and a thick edge. Therefore, the adhesive dots are called the initial structures of the adhesive dots. The first dispensing device may be a syringe-based dispensing device, whose dot-array coating head is needle-shaped and has an adjustable aperture, and accordingly has high coating consistency.

Components of the adhesive solution are not particularly limited in the present disclosure. The components may include a polymer, a dispersant, a binder, and the first solvent. The dispersant includes, but is not limited to, at least one of polyacrylic acid (PAA), sodium polyacrylate, polyacrylic acid salt copolymer, carboxymethyl cellulose (CMC), or sodium carboxymethyl cellulose. The binder includes, but is not limited to, at least one of styrene-butadiene latex, styrene-acrylic latex, pure styrene latex, polymethyl methacrylate, polybutyl methacrylate, polyethyl acrylate, polyvinyl alcohol, ethylene-vinyl acetate copolymer, polyvinyl acetate, or polyurethane. In addition, the adhesive solution may further include an additive. The additive includes, but is not limited to, at least one of fluoroalkyl methoxy ether alcohol, fluoroalkyl ethoxy ether alcohol, polyoxyethylene alkyl amide, or fatty alcohol polyoxyethylene ether. In the adhesive solution, on a dry basis (i.e., excluding the first solvent), the polymer has a mass fraction of 85 to 90 parts, the dispersant 1 to 5 parts, the binder 5 to 10 parts, and the additive 0 to 1 part, where a sum of mass fractions of the above components is 100 parts.

In the step B, the second solvent may be dispensed to the surface of each of the initial structures of the adhesive dots by a dot-array coating head of a second dispensing device to form the second solvent droplet. The second solvent is insoluble or slightly soluble in the first solvent. Since the two solvents are insoluble, the second solvent droplet can rest on the surface of the initial structures of the adhesive dot. The initial structure of the adhesive dot is subjected to a downward pressure from the second solvent droplet, forming a morphology with a sunken central part and a raised periphery. The second dispensing device may be a jet dispensing device, whose dot-array coating head is needle-shaped and has an adjustable aperture.

In some embodiments, a temperature for the heating treatment ranges from 60 °C to 90 °C, and a boiling point of the second solvent is lower than or equal to 90 °C. If the temperature for the heat treatment is too low, the second solvent is difficult to volatilize and the initial structures of the adhesive dots are difficult to be cured. If the temperature for heat treatment is too high, the adhesive dot and base film may be damaged. Based on this, in the embodiments of the present disclosure, the temperature for the heat treatment is adjusted and controlled within the above range, and the second solvent with the boiling point within the above range is selected. In this way, on the one hand, volatilization of the second solvent during heating and curing of the initial structures of the adhesive dots can be facilitated. On the other hand, damage can be avoided from occurring in the adhesive dot and the base film due to an excessive temperature. Therefore, the adhesion performance of the separator is enhanced.

In some embodiments, each of the second solvent droplets has a thickness ranging from 1 µm to 13 µm and a diameter ranging from 200 µm to 1000 µm. In some embodiments, the thickness of the second solvent droplet ranges from 3 µm to 8 µm. For example, the second solvent droplet has a thickness of 1 µm, 5 µm, 10 µm, or 13 µm and a diameter of 200 µm, 500 µm, 800 µm, or 1000 µm. When the thickness and the diameter of the second solvent droplet are too small, a center of the adhesive dot is less likely to expose to the base film, which is not conducive to enhancing the adhesion performance between the separator and the electrode plate. When the thickness and the diameter of the second solvent droplet are too large, the effective bonding area of the adhesive dot is small, which may also lead to poor adhesion performance. By adjusting and controlling the thickness and the diameter of the second solvent droplet to be within the above range, the adhesion performance between the separator and the electrode plate can be easily enhanced.

In some embodiments, the first solvent is water. The second solvent is selected from at least one of dichloromethane, dichloroethane, and carbon tetrachloride. The adhesive solution is an aqueous system.

In some embodiments, the first solvent is selected from at least one of dimethylacetamide (DMAC) or N-methylpyrrolidone (NMP). The second solvent is selected from at least one of cyclohexane or cyclopentane. The adhesive solution is an oily system.

The method for adjusting and controlling the thickness and/or the diameter of the adhesive dot is not particularly limited in the present disclosure, as long as the objective of the present disclosure can be achieved. Exemplarily, the thickness and/or the diameter of the adhesive dot usually increase with an increase in the aperture of the coating head of the dispensing device. Based on this, in the preparation process of the initial structure of the adhesive dot, the thickness and/or the diameter of the adhesive dot may be controlled by adjusting the aperture of the coating head of the syringe-based dispensing device. In some other embodiments, the thickness and/or the diameter of the adhesive dot may also be controlled by adjusting properties of the adhesive solution itself, for example, by adjusting parameters of the adhesive solution such as solids content and viscosity. Generally, the smaller the solids content and the viscosity of the adhesive solution, the smaller the thickness and the diameter of the adhesive dot. Based on this, the most suitable formulation and coating head may be selected in combination with device capabilities and material characteristics.

The method for adjusting and controlling the thickness and/or the diameter of the second solvent droplet is not particularly limited in the present disclosure, as long as the objective of the present disclosure can be achieved. Exemplarily, the thickness and/or the diameter of the second solvent droplet usually increases with an increase of the aperture of the coating head of the dispensing device. Based on this, during formation of the second solvent droplet, the thickness and/or the diameter of the second solvent droplet may be controlled by adjusting and controlling the aperture of the coating head of the jet dispensing system.

In the method for preparing the separator according to the embodiments of the present disclosure, the initial structures of the adhesive dots are prepared through a dispensing process. insolubility between the first solvent and the second solvent in the initial structure of the adhesive dots is innovatively utilized by dispensing the second solvent to the surfaces of the initial structures of the adhesive dots to form the second solvent droplets, allowing the initial structure of each adhesive dots to form a morphology with a sunken central part and a raised periphery. After subsequent heat treatment, the adhesive dot with morphological characteristics herein is formed, offering advantages of a simple preparation process and easy precise control of process parameters. In addition, the prepared adhesive dots in the dot-array pattern can reduce the influence of the separator on the kinetic performance of the lithium-ion battery while enhancing the adhesion performance between the separator and the electrode plate.

Embodiments of the present disclosure also provide a battery. The battery includes the separator according to any one of the above embodiments.

In some embodiments, the battery further includes an electrode plate. An adhesion strength between the separator and the electrode plate ranges from 2 N/m to 10 N/m. For example, the adhesion strength between the separator and the electrode plate is 2 N/m, 4 N/m, 5 N/m, 8 N/m, or 10 N/m. The above adhesion strength includes an adhesion strength between the separator and the positive electrode plate or an adhesion strength between the separator and the negative electrode plate. By adjusting and controlling the adhesion strength between the separator and the electrode plate to be within the above range, the separator is less likely to delaminate during cycling of the battery, enhancing structural stability of the battery. Also, risks such as active material shedding from the electrode plate and poor electrolyte wetting due to a high adhesion strength can be reduced.

The lithium-ion battery according to the embodiments of the present disclosure further includes the positive electrode plate. The positive electrode plate is not particularly limited in the present disclosure as long as the objective of the present disclosure can be achieved. For example, the positive electrode plate typically includes a positive current collector and a positive material layer. The positive material layer may be arranged on a surface of the positive current collector in a thickness direction, or may be arranged on two surfaces of the positive current collector in the thickness direction. In some embodiments of the present disclosure, the positive material layer is arranged on a surface of the positive current collector. That is, the positive material layer may be arranged in a partial region of a surface of the positive current collector, or may be arranged on an entire region of the surface of the positive current collector. In the embodiments of the present disclosure, the positive current collector is not particularly limited as long as the objective of the present disclosure can be achieved. For example, the positive current collector may include, but is not limited to, an aluminum foil, an aluminum alloy foil, or a composite current collector. In the embodiments of the present disclosure, a thickness of the positive current collector is not particularly limited as long as the objective of the present disclosure can be achieved. The thickness ranges from, for example, 4 µm to 12 µm. A single-side thickness of the positive material layer of the present disclosure may range from 8 µm to 15 µm.

In the embodiments of the present disclosure, the positive active material layer includes a positive active material, which is not particularly limited in the present disclosure as long as the objective of the present disclosure can be achieved. For example, the positive active material may include at least one of lithium iron phosphate, a lithium-rich manganese-based material, lithium cobaltate, lithium manganate, or lithium manganese iron phosphate.

In some embodiments of the present disclosure, the positive active material layer may further include a positive binder, which is not particularly limited in the present disclosure as long as the objective of the present disclosure can be achieved. For example, the positive binder may include, but is not limited to, at least one of a fluorine-containing resin, a polypropylene resin, a fiber-based binder, a rubber-based binder, or a polyimide-based binder.

The lithium-ion battery according to the embodiments of the present disclosure further includes the negative electrode plate. The negative electrode plate is not particularly limited in the present disclosure as long as the objective of the present disclosure can be achieved. For example, the negative electrode plate typically includes a negative current collector and a negative material layer. The negative material layer may be arranged on a surface or two surfaces of the negative current collector in a thickness direction. In some embodiments of the present disclosure, the negative material layer is arranged on a surface of the negative current collector. That is, the negative material layer may be arranged on a partial region of a surface of the negative current collector, or may be arranged on an entire region of the surface of the negative current collector. In the embodiments of present disclosure, the negative current collector is not particularly limited as long as the objective of the present disclosure can be achieved. For example, the negative current collector may include, but is not limited to, a copper foil, a copper alloy foil, a nickel foil, or a composite current collector. In the embodiments of present disclosure, a thickness of the negative current collector is not particularly limited as long as the objective of the present disclosure can be achieved. The thickness ranges from, for example, 4 µm to 12 µm. A single-side thickness of the negative material layer according to some embodiments of the present disclosure may range from 70 µm to 200 µm.

In some embodiments of present disclosure, the negative material layer includes a negative electrode material, which is not particularly limited as long as the objective of the present disclosure can be achieved. For example, the negative electrode material may include at least one of artificial graphite, natural graphite, mesophase carbon microspheres, soft carbon, hard carbon, silicon, or silicon carbon.

In some embodiments of present disclosure, the negative material layer may further include a negative binder. The negative binder is not particularly limited in the present disclosure as long as the objective of the present disclosure can be achieved. For example, the negative binder may include, but is not limited to, at least one of acrylate, polyamide, polyimide, polyamideimide, polyvinylidene fluoride, styrene-butadiene rubber, sodium alginate, polyvinyl alcohol, polytetrafluoroethylene, polyacrylonitrile, sodium carboxymethyl cellulose, or potassium carboxymethyl cellulose.

The base film of the separator is not particularly limited in the present disclosure, which can be selected by those skilled in the art as desired, as long as the objective of the present disclosure can be achieved. For example, the base film is a non-woven fabric, a film, or a composite film that has a porous structure. The base film is made of a material selected from at least one of polyethylene, polypropylene, polyethylene terephthalate, or polyimide. In an exemplary embodiment of the present disclosure, a porous polypropylene film, a porous polyethylene film, a polypropylene non-woven fabric, a polyethylene non-woven fabric, or a polypropylene-polyethylene-polypropylene porous composite film may be used.

The battery according to the embodiments of the present disclosure further includes an electrolyte. The electrolyte is not particularly limited in the present disclosure, which can be selected by those skilled in the art as desired, as long as the objective of the present disclosure can be achieved. For example, at least one of ethylene carbonate (EC), propylene carbonate (PC), diethyl carbonate (DEC), ethyl propionate (EP), propyl propionate (PP), ethyl methyl carbonate (EMC), dimethyl carbonate (DMC), vinylene carbonate (VC), or fluoroethylene carbonate (FEC) may be selected and mixed in a predetermined mass ratio or a predetermined volume ratio to obtain a non-aqueous organic solvent, followed by addition of a lithium salt, which is then dissolved and uniformly mixed to form the electrolyte. The lithium salt is not particularly limited in the present disclosure as long as the objective of the present disclosure can be achieved. For example, the lithium salt may include at least one of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, lithium bisoxalato borate (LiBOB), or lithium difluoroborate. Concentration of the lithium salt in the electrolyte is not particularly limited in the present disclosure as long as the objective of the present disclosure can be achieved. For example, the concentration of the lithium salt ranges from 1.0 mol/L to 2.0 mol/L.

The battery according to the embodiments of the present disclosure further includes a case. The case is not particularly limited in the present disclosure and may be selected by those skilled in the art as desired, as long as the objective of the present disclosure can be achieved. For example, the case may include an aluminum-plastic film.

A method for preparing the battery is not particularly limited in the present disclosure, and a method known in the art can be selected as long as the objective of the present disclosure can be achieved. For example, the method for preparing the battery includes, but is not limited to: stacking the positive electrode plate, the separator, and the negative electrode plate in order; winding and folding the stacked structure as desired to obtain a wound or folded bare cell; placing the bare cell into a packaging bag; injecting the electrolyte into the bag; and sealing the bag to obtain the battery.

Embodiments of the present disclosure further provide an energy storage apparatus. The energy storage apparatus includes a housing and at least one battery. Each of the at least one battery is the battery according to any one of the above embodiments. The at least one battery is received in the housing. The energy storage apparatus having the battery exhibits excellent performance, which facilitates operation of the energy storage apparatus. By receiving the battery in the housing, fixation and protection for the battery can be increased, and thus a service life of the energy storage apparatus can be prolonged. It should be understood that the energy storage apparatus may have one or more batteries. When a plurality of batteries are included in the energy storage apparatus, the plurality of batteries may be connected to one another in parallel and/or in series.

Embodiments of the present disclosure further provide an electricity-consumption device. The electricity-consumption device includes the energy storage apparatus according to the above embodiments, which is conducive to enhancing product competitiveness and performance of the electricity-consumption device. In some embodiments, the electricity-consumption device includes an electricity-consumption device body. The energy storage apparatus is configured to supply power to the electricity-consumption device body. In some embodiments, the electricity-consumption device body includes a device positive electrode and a device negative electrode. The positive electrode plate of the battery in the energy storage apparatus is configured to be electrically connected to the device positive electrode of the electricity-consumption device body. The negative electrode plate of the battery in the energy storage apparatus is configured to be electrically connected to the device negative electrode of the electricity-consumption device body, to supply power to the electricity-consumption device.

The electricity-consumption device of the present disclosure may include, but is not limited to, a container, a household energy storage system, a battery-powered bike, an electric vehicle, a ship, an aerospace vehicle, an electric toy, and an electric tool. The aerospace vehicle is, for example, an airplane, a rocket, a space shuttle, and a spacecraft. The electric toy includes, for example, a fixed or mobile electric toy, such as an electric car toy, an electric ship toy, and an electric airplane toy. The electric tool includes, for example, a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer.

As illustrated in FIG. 5, which is a schematic structural diagram of a household energy storage system according to an embodiment of the present disclosure, a household energy storage scenario in user-side energy storage is illustrated as an example, and the energy storage apparatus according to the embodiments of the present disclosure is not limited to the household energy storage scenario.

Embodiments of the present disclosure provide a household energy storage system. The household energy storage system includes an electrical energy conversion apparatus 2 (a photovoltaic panel), a first user load 3 (a street lamp), a second user load 4 (for example, a household appliance such as an air conditioner), and an energy storage apparatus 1. The energy storage apparatus 1 is a small energy storage cabinet and may be mounted on an outdoor wall in a wall-mounted manner. In an exemplary embodiment of the present disclosure, the solar panel may convert solar energy into electrical energy during periods of low electricity prices. The energy storage apparatus 1 is configured to store the electrical energy and supply the electrical energy to the street lamp and the household appliance for use during periods of high electricity prices, or to supply power when the power grid is cut off/powered off.

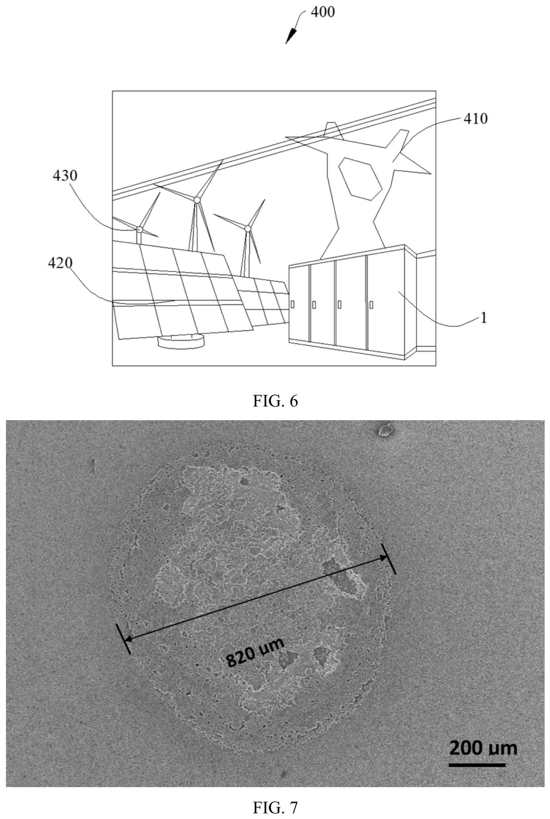

As illustrated in FIG. 6, which is a schematic structural diagram of an energy storage system 400 according to an embodiment of the present disclosure, a generation/distribution side shared energy storage scenario is illustrated as an example, and the energy storage apparatus 1 according to the embodiments of the present disclosure is not limited to the generation/distribution side energy storage scenario.

Embodiments of the present disclosure provide an energy storage system 400. The energy storage system 400 includes a high-voltage cable 410, a first electrical energy conversion apparatus 420, a second electrical energy conversion apparatus 430, and the energy storage apparatus 1 according to the embodiments of the present disclosure. In the case of power generation, the first electrical energy conversion apparatus 420 and the second electrical energy conversion apparatus 430 are configured to convert energy in other forms into the electrical energy, and connected to the high-voltage cable 410. The electrical energy is supplied to a consumer side of a power distribution network for use. When an electricity load is low, the first electric energy conversion apparatus 420 and the second electric energy conversion apparatus 430 generate an excess power, which is stored in the energy storage apparatus 1. In this way, a wind power curtailment rate and a solar power curtailment rate can be reduced, improving accommodation of renewable energy generation. When the electricity load is high, the power grid sends an instruction to transmit electricity stored in the energy storage apparatus 1 to the consumer side in a grid-connected mode in coordination with the high-voltage cable 410, providing various services for power grid operation such as peak shaving, frequency modulation, and standby power. In this way, the peak shaving of the power grid can be fully used, promoting peak clipping and valley filling of the power grid, and thus alleviating a power supply pressure of the power grid.

In another exemplary embodiment of the present disclosure, the first electrical energy conversion apparatus 420 and the second electrical energy conversion apparatus 430 may convert at least one of solar energy, light energy, wind energy, thermal energy, tidal energy, biomass energy, mechanical energy, or the like into the electrical energy.

A plurality of energy storage apparatuses 1 may be provided. The plurality of energy storage apparatuses 1 may be connected in series or in parallel with one another. The plurality of energy storage apparatuses 1 are supported by an isolation plate (not illustrated) and electrically connected to one another. In this embodiment, "plurality" means two or more. An energy storage tank may be arranged outside the energy storage apparatus 1 for receiving the energy storage apparatus 1.

In another exemplary embodiment of the present disclosure, the energy storage apparatus 1 may include, but is not limited to, a battery module, a battery pack, a battery system, or the like. The battery module may be a battery module formed by connecting a plurality of batteries of the present disclosure in series/parallel. The battery pack may include the plurality of batteries according to the embodiments of the present disclosure. The battery system may be a charging/discharging system including the battery or battery pack according to the embodiments of the present disclosure.

An actual application form of the energy storage apparatus 1 according to the embodiment of the present disclosure may be, but is not limited to, the listed products. The energy storage apparatus 1 may be applied in other forms. The application form of the energy storage apparatus 1 is not strictly limited to the embodiments of the present disclosure. In the embodiments of the present disclosure, only the energy storage apparatus 1 as a multi-cell battery is described as an example. When the energy storage apparatus 1 is a single battery, the energy storage apparatus 1 may be at least one of a cylindrical battery or a prismatic battery.

The separator and the method for preparing the same according to the embodiments of the present disclosure will be further described below with reference to more examples.

### Examples

Embodiments of the present disclosure will be described in more detail with reference to preparation examples, examples, and comparative examples. Various tests and evaluations were performed according to the following methods.

### Example 1

### <Preparation of the Separator>

### <Preparation of the Adhesive Solution>

Polymer particles of PVDF (average particle size: 6 µm, weight-average molecular weight: 50 to 150), dispersant PAA, and binder CMC were mixed in a mass ratio of 90:2:8. Then, deionized water of the first solvent was added to prepare the adhesive solution. A mass percentage of the first solvent in the adhesive solution is 85% and a mass percentage of solids is 15%.

### <Preparation of the Initial Structures of the Adhesive Dots >

Using a time-pressure dispensing device (MUSASHI, Japan, Model ML-5000XII), the prepared adhesive solution was dispensed onto one surface of the base film to form the initial structures of the adhesive dots distributed in the dot-array pattern.

### <Preparation of the Adhesive Dot>

Using a jet dispensing device (Vermes, Germany, Model MDV3200A), a second solvent of dichloromethane was dispensed onto surfaces of the initial structures of the adhesive dots to form the second solvent droplets. Each of the second solvent droplet has a thickness and a diameter as illustrated in Table 1. The heating treatment is performed on the initial structures of the adhesive dots with the second solvent droplets on the surfaces of the initial structures of the adhesive dots. The heating treatment is performed at a temperature of 60°C for 5 minutes to form the adhesive dots. The thickness and the diameter of the adhesive dot are also illustrated in Table 1.

### <Preparation of the Positive electrode plate >

Lithium iron phosphate (LiFePO₄) as the positive active material, conductive carbon black (Super-P), and binder PVDF were mixed in a mass ratio of 94:3:3. Then, N-methylpyrrolidone (NMP) was added as a solvent to prepare a positive electrode slurry with a solids content of 60 wt%, which was stirred uniformly. The positive electrode slurry was then evenly coated onto a surface of a 10 µm-thick aluminum foil of the positive current collector. After drying, cold pressing, slitting, blanking, and tab welding, the positive electrode plate was obtained. The single-side thickness of the positive active material layer is 100 µm.

### Example 2 to Example 6

Example 2 to Example 6 were the same as in Example 1, except that in the **<Preparation of the Separator>,** the thickness and the diameter of the second solvent droplet, and the thickness and the diameter of the adhesive dot, were adjusted according to Table 1.

### Example 7 to Example 9

Example 7 to Example 9 were the same as in Example 3, except that in the **<Preparation of the Separator>,** the thickness of the base film was adjusted according to Table 1.

### Example 10 to Example 12

Example 10 to Example 12 were the same as in Example 3, except that in the **<Preparation of the Separator>,** the single-sided areal density of the adhesive layer was adjusted according to Table 1.

### Example 13 to Example 16

Example 13 to Example 16 were the same as in Example 2, except that in the **<Preparation of the Separator>,** relevant preparation parameters were adjusted according to Table 2.

### Comparative Example 1 and Comparative Example 2

Comparative Example 1 and Comparative Example 2 were the same as in Example 1, except that in the **<Preparation of the Separator>,** the thickness and the diameter of the second solvent droplet, and the thickness and the diameter of the adhesive dot, were adjusted according to Table 1.

### Comparative Example 3

Comparative Example 3 was the same as in Example 1, except that in the **<Preparation of the Separator>,** no second solvent droplets were formed on the surfaces of the initial structures of the adhesive dots. That is, the heating treatment is directly performed on the formed initial structures to form the adhesive dots.

**Table 1 Preparation Parameters of Examples 1 to 12 and Comparative Examples 1 to 3**

| | Second Solvent Droplet Thickness (µm) | Second Solvent Droplet Diameter (µm) | Adhesive Dot Thickness (µm) | Adhesive Dot Diameter (µm) | Heating Temperature (°C) | M/S (g/m² ) | Base Film Thickness (µm) |
|---|---|---|---|---|---|---|---|
| Example 1 | 1 | 240 | 2 | 300 | 60 | 1.0 | 10 |
| Example 2 | 3 | 450 | 4 | 500 | 60 | 1.0 | 10 |
| Example 3 | 5 | 700 | 7 | 800 | 60 | 1.0 | 10 |
| Example 4 | 6 | 850 | 8 | 1000 | 60 | 1.0 | 10 |
| Example 5 | 10 | 1600 | 11 | 2000 | 60 | 1.0 | 10 |
| Example 6 | 13 | 3500 | 15 | 4000 | 60 | 1.0 | 10 |
| Example 7 | 5 | 700 | 7 | 800 | 60 | 1.0 | 5 |
| Example 8 | 5 | 700 | 7 | 800 | 60 | 1.0 | 15 |
| Example 9 | 5 | 700 | 7 | 800 | 60 | 1.0 | 20 |
| Example 10 | 5 | 700 | 7 | 800 | 60 | 0.5 | 10 |
| Example 11 | 5 | 700 | 7 | 800 | 60 | 1.5 | 10 |
| Example 12 | 5 | 700 | 7 | 800 | 60 | 2.0 | 10 |
| Comparative Example 1 | 0.3 | 100 | 1 | 150 | 60 | 1.0 | 10 |
| Comparative Example 2 | 20 | 5000 | 20 | 6000 | 60 | 1.0 | 10 |
| Comparative Example 3 | / | / | 4 | 500 | 60 | 1.0 | 10 |

In Table 1, "/" indicates that there is no relevant preparation parameter.

**Table 2 Preparation Parameters of Example 2 and Example 13 to Example 16**

| | Type of Polymer Particles | Type of First Solvent | Type of Second Solvent |
|---|---|---|---|
| Example 2 | PVDF | Water | Dichloromethane |
| Example 13 | PMMA | Water | Dichloromethane |
| Example 14 | PVDF | Water | Carbon Tetrachloride |
| Example 15 | PVDF | DMAC | Cyclohexane |
| Example 16 | PVDF | NMP | Cyclopentane |

### Test Methods and Devices

### Adhesive Dot Thickness Measurement:

The thickness of the adhesive dot was measured using an in-line thickness gauge.

### Separator Adhesion Performance Test:

The separator and the electrode plate (for example, the positive electrode plate) are stacked in an order of "positive electrode plate-separator-positive electrode plate" as test pieces. Hot pressing parameters are set as follows: a hot-pressing temperature is 25 °C, a hot-pressing pressure is 20 tons (T), and a hot-pressing duration is 40 s, and then hot pressing is performed. After the hot-pressing, a positive electrode plate corresponding to a side of the separator without the adhesive layer is peeled off. The hot-pressed test piece is cut into strips of 100 mm×20 mm. An adhesive strength between a side of the separator with the adhesive layer and the positive electrode plate is tested by a tensile tester, expressed in N/m, with a test speed of 350 mm/min and a travel distance of 500 mm.

### Separator Ionic Impedance Test:

The ionic impedance of the separator was determined in accordance with the ionic conductivity test method specified in Clause 6.6.2 of GB/T 36363-2018 "Polyolefin Separators for Lithium-Ion Batteries". A linear fit was performed with a number of separator layers as an x-axis and the measured resistance as a y-axis, from which the ionic impedance of the separator was derived.

**Table 3 Performance Data of Examples 1 to 16 and Comparative Examples 1 to 3**

| | Adhesion Strength between Separator and Positive electrode plate (N/m) | Ionic Impedance (mΩ) |
|---|---|---|
| Example 1 | 3.2 | 0.9419 |
| Example 2 | 4.7 | 0.8763 |
| Example 3 | 5.2 | 0.8461 |
| Example 4 | 4.8 | 0.8376 |
| Example 5 | 4.2 | 0.8263 |
| Example 6 | 3.8 | 0.7816 |
| Example 7 | 5.1 | 0.7904 |
| Example 8 | 5.1 | 0.8667 |
| Example 9 | 5.2 | 0.9130 |
| Example 10 | 3.0 | 0.7036 |
| Example 11 | 5.8 | 0.8961 |
| Example 12 | 6.3 | 0.9761 |
| Example 13 | 4.4 | 0.9871 |
| Example 14 | 5.3 | 0.8489 |
| Example 15 | 5.2 | 0.8368 |
| Example 16 | 5.2 | 0.8412 |
| Comparative Example 1 | 2.1 | 0.7338 |
| Comparative Example 2 | 2.7 | 0.7019 |
| Comparative Example 3 | 1.6 | 1.1040 |

Together with Table 1 and Table 3, it can be seen from Examples 1 to 6 and Comparative Examples 1 to 3 that when the thickness and the diameter of the adhesive dot are too small (for example, Comparative Example 1), the adhesion strength of the separator is low. When the thickness and the diameter of the adhesive dot are too large (for example, Comparative Example 2), the adhesion strength of the separator is also low. When the adhesive dots are not formed by using the second solvent droplets (e.g. Comparative Example 3), the adhesion strength of the separator is relatively low, and the ionic impedance is relatively high, which may be due to the fact that the adhesive dot in Comparative Example 3 does not have the characteristic of thick edge and thin central part. Therefore, the adhesive dot has higher aggregation and greater cohesion, which is not conducive to enhancing the adhesion strength and reducing the ionic impedance.

Parameters such as the thickness of the base film, the single-sided areal density of the adhesive layer may also have an impact on performance of the separator. As can be seen from Example 7 to Example 12, on the basis of a structure of the separator according to the embodiments of the present disclosure, by adjusting and controlling the above parameters within the ranges as described above, a separator with high adhesion performance and low ionic impedance can be easily obtained.

The type of polymer particles, the type of the first solvent, and the type of the second solvent generally may also have an impact on the performance of the separator. As can be seen from Example 2 and Example 13 to Example 16, on the basis of the structure of the separator according to the embodiments of the present disclosure, by adjusting and controlling the above parameters within the ranges as described above, a separator with high adhesion performance and low ionic impedance can be easily obtained.

FIG. 7 is a photograph of the adhesive dot prepared in Example 3 of the present disclosure. As can be seen, the adhesive dot has a crater-like morphology with a raised edge and a sunken central part, and a diameter of approximately 800 µm.

The separator and the method for preparing the same, the battery, the energy storage apparatus, and the electricity-consumption device and the preparation method thereof disclosed in the present disclosure are described in detail above. A principle and an implementation mode of the present disclosure are described herein by applying specific examples. Description of the above embodiments is only intended to help understand the technical solutions and core inventive ideas of the embodiments of the present disclosure. Meanwhile, for those of ordinary skill in the art, various changes may be made in the specific embodiments and applications based on the teachings of the present disclosure. Therefore, the contents of this specification should not be construed as limiting the present disclosure.

## Claims

1. A separator, comprising:
a base film (10); and
an adhesive layer (20) arranged on at least one surface of the base film (10),
wherein the adhesive layer (20) comprises a plurality of adhesive dots (21) distributed in a dot-array, wherein a thickness of each of the plurality of adhesive dots (21) gradually decreases from an edge of the adhesive dot (21) to a center of the adhesive dot (21).

2. The separator according to claim 1, wherein the thickness of each of the plurality of adhesive dots (21) is H, where 2 µm≤H≤15 µm.

3. The separator according to claim 1 or 2, wherein each of the plurality of adhesive dots (21) has a crater-like morphology with a raised edge and a sunken central part.

4. The separator according to claim 1 or 2, wherein each of the plurality of adhesive dots (21) has a diameter ranging from 200 µm to 4000 µm.

5. The separator according to claim 1 or 2, wherein the adhesive layer (20) has a mass of M, and wherein the base film (10) has an area of S, where 0.5 g/m²≤M/S≤2.0 g/m².

6. The separator according to claim 1 or 2, wherein the base film (10) has a thickness ranging from 5 µm to 20 µm.

7. The separator according to claim 1 or 2, wherein each of the plurality of adhesive dots (21) comprises polymer particles, wherein the polymer particles are selected from at least one of polyvinylidene fluoride particles or polymethyl methacrylate particles.

8. A method for preparing the separator according to any one of claims 1 to 7, the method comprising:
dispensing an adhesive solution onto the at least one surface of the base film (10) to form initial structures of the plurality of adhesive dots (21) distributed in the dot-array pattern, the adhesive solution containing a first solvent;
dispensing a second solvent onto surfaces of the initial structures of the plurality of adhesive dots (21) to form second solvent droplets, the second solvent being insoluble or slightly soluble in the first solvent; and
performing a heating treatment on the initial structures with the second solvent droplets on the surfaces of the initial structures, wherein the initial structures of the plurality of adhesive dots (21) are cured by heating while the second solvent droplets are evaporated by heating, to form the plurality of adhesive dots (21).

9. The method according to claim 8, wherein:
a temperature for the heating treatment ranges from 60 °C to 90 °C; and
a boiling point of the second solvent is lower than or equal to 90 °C.

10. The method according to claim 8, wherein each of the second solvent droplets has a thickness ranging from 1 µm to 13 µm and a diameter ranging from 200 µm to 1000 µm.

11. The method according to claim 8, wherein:
the first solvent is water, and the second solvent is selected from at least one of dichloromethane, dichloroethane, or carbon tetrachloride; or
the first solvent is selected from at least one of dimethylacetamide or N-methylpyrrolidone, and the second solvent is selected from at least one of cyclohexane or cyclopentane.

12. A battery, comprising:
the separator according to any one of claims 1 to 7; or
the separator prepared by the method according to any one of claims 8 to 11.

13. The battery according to claim 12, further comprising an electrode plate, wherein an adhesion strength between the separator and the electrode plate ranges from 2 N/m to 10 N/m.

14. An energy storage apparatus (1), comprising:
a housing; and
at least one battery received in the housing, each of the at least one battery being the battery according to claim 12 or 13.

15. An electricity-consumption device, comprising:
the energy storage apparatus (1) according to claim 14, the energy storage apparatus (1) being configured to supply power to the electricity-consumption device.
